# EUROPÄISCHE PATENTSCHRIFT

(11) **EP 2 318 852 B1**
(45) Veröffentlichungstag und Bekanntmachung des Hinweises auf die Patenterteilung: **25.04.2012**
(21) Anmeldenummer: 09780066.8
(22) Anmeldetag: 01.07.2009
(51) Int. Cl.: G01R 31/36

(54) **AKKUMULATORÜBERWACHUNGSSYSTEM**
MONITORING SYSTEM FOR AN ACCUMULATOR
SYSTÈME DE CONTRÔLE D'ACCUMULATEUR

(30) Priorität: 25.08.2008 DE 102008041518
(43) Veröffentlichungstag der Anmeldung: 11.05.2011
(73) Patentinhaber: Robert Bosch GmbH, 70442 Stuttgart (DE)
(72) Erfinder: WOLF, Michael, 70806 Kornwestheim (DE); BREMMER, Marcus, 71726 Benningen Am Neckar (DE); WENGER, Christoph, 70825 Korntal-Muenchingen (DE)
(86) Internationale Anmeldenummer: PCT/EP2009/058275
(87) Internationale Veröffentlichungsnummer: WO 2010/022999

(56) Entgegenhaltungen:
- WO-A1-99/27628
- DE-A1-102004 003 198
- US-A- 5 773 962

## Beschreibung

### Stand der Technik

Die Erfindung geht aus von Vorrichtungen zur Erfassung des Stroms, Temperatur oder der Spannung eines Akkumulators.

Soll der Zustand eines Akkumulators, beispielsweise eines Bleiakkumulators eines Kraftfahrzeugs, von außen ohne Eingriff in den Akkumulator bestimmt werden, so werden die von außen zugänglichen Größen Strom, Spannung und Temperatur erfasst. Diese drei Grö-βen dienen als Eingangsgrößen für ein Verfahren, das daraus unter Verwendung von Datenverarbeitungsvorrichtungen den Akkumulatoizustand ermittelt. Zur Strommessung verwenden bisherige Systeme entweder Shunt-Widerstände oder induktive Strommessprinzipien, wobei die Auswertungselektronik sowie der Stromsensor in einer Mechanik integriert ist. Üblicherweise wird die Gesamtanordnung beispielsweise bei einem Bleiakkumulator eines Kraftfahrzeugs mit Stromsensor, Spannungserfassung, Temperaturerfassung, Signalverarbeitung und -Aufbereitung sowie Gehäuse in einer Polnische des Akkumulators integriert, wobei eine aus der Gesamtanordnung herausragende Klemme mit dem Pol elektrisch verbunden wird. Insbesondere bei der Erfassung von Betriebszuständen, die direkt am Akkumulator erfasst werden, ist es notwendig, den Sensor an dem Akkumulator vorzusehen, wobei es ferner üblich ist, auch die zugehörige Signalaufbereitung dort anzubringen, um Verfälschungen durch lange Leitungen zu vermeiden.

Wenn beispielsweise der Strom mittels eines Shunt-Widerstands gemessen werden soll, so ist der Shunt zur Vermeidung von Leitungsverlusten direkt am Akkumulator vorzusehen, und es ist ferner üblich, auch eine Signalvorverarbeitung direkt am Shunt vorzusehen, um bei geringen Strömen, beispielsweise weniger als 1 Ampere, Verfälschungen durch Spannungsabfälle und durch in die Messleitungen induzierte Spannungen so niedrig wie möglich zu halten. Um die Baugröße und die Abwärme gering zu halten, werden Shunt-Widerstände üblicherweise mit sehr geringen Widerstandswerten ausgestattet, d.h. < 1 Ohm oder im Fahrzeugbereich beispielsweise 100µOhm, so dass bei geringen Strömen gemäß U = R x I ebenso sehr geringe Spannungen von einigen nV oder µV am Shunt-Widerstand abfallen, die den Strompegel widerspiegeln. Derart geringe Spannungswerte treten ebenso bei Temperaturerfassungen auf, da Temperatursensoren, abhängig vom Sensortyp ebenso Signale abgeben, die durch große Kabellängen und aufgrund der geringen Spannungspegel leicht verfälscht werden können. Insbesondere ist hier anzumerken, dass bei der Verwendung in einem Motorraum eines Kraftfahrzeugs zahlreiche Störquellen auf das Signalkabel einwirken.

Daher sehen Akkumulatorbewachungssysteme gemäß dem Stand der Technik vor, nicht nur die Sensoren selbst, sondern auch eine Aufbereitungsschaltung bzw. eine Erfassungsschaltung direkt am Akkumulator anzubringen. Der Einfluss von Störquellen wird so durch die Aufbereitung direkt am Sensor verringert.

Nachteil dieser Anordnungen ist eine relativ aufwändige Mechanik, die in der Lage ist, E-lektronikkomponenten und stromführende Leiter / Sensoren so zu verbinden, dass ein ausreichender Korrosionsschutz und bestimmte Schutzklassen, beispielsweise IP5X5 oder höher, gewährleistet sind, insbesondere bei Anwendungen im Kraftfahrzeugbereich. Ferner ist bei der Anordnung gemäß dem Stand der Technik erforderlich, dass Elektronik- und Signalverarbeitungskomponenten in der Sensoreinheit, d.h. am Akkumulator selbst vorgesehen werden, wobei jedoch üblicherweise ein übergeordnete Steuereinheit bzw. Datenverarbeitungsschaltung derartige Komponenten bereits vorhanden sind und mitgenutzt werden könnten. Aus diesem Grund sind die zur Signalaufbereitung vorgesehenen Komponenten am Akkumulator sowie in einer übergeordneten Datenverarbeitungsschaltung auf Grund der im Stand der Technik verwendeten Systemarchitektur vorgesehen. Durch die doppelte Auslegung der Komponenten entstehen somit unnötige Kosten.

Aus der Druckschrift DE 102004003198 A1 ist bekannt, ein Sensorelement und ein Temperaturmesselement in einem Gehäuse eines Sensormoduls anzubringen, das am Akkumulator vorgesehen ist. Das Sensormodul enthält keine aktive Elektronik, wobei die gesamte Auswertung in einer Berechnungseinheit vorgesehen ist, die alle weiteren Auswertungskomponenten enthält, d.h. neben einer Berechnungseinheit auch eine Signalaufbereitungseinheit. Zur Stromerfassung wird üblicherweise ein Shunt-Widerstand mit geringem Widerstand, beispielsweise 100 µΩ verwendet, um Ströme zwischen einigen Milliampere und Kiloampere zu messen. Bei der Verwendung eines Shunt-Widerstands als Stromsensorelement können besonders einfache Bauelemente verwendet werden. Jedoch übertragen in dem oben genannten Dokument des Stands der Technik Signalleitungen Signale zwischen dem Sensormodul und der dazu entfernt gelegenen kombinierten Berechnungseinheit, die Störungsanfällig sind. Diese Leitungen übertragen Signale mit geringem Pegel über eine Distanz von bis zu 10 m im Motorraum, wobei auch die Versorgungsleitungen für die kombinierte Berechnungseinheit ebenso mehrere Meter überbrücken müssen, wodurch sich insgesamt ein Massenversatz zwischen Minuspol der Batterie einerseits und Versorgungsspannung der Berechnungseinheit andererseits ergibt, der die Messsignale verfälscht. Insbesondere bei der Erfassung von geringen Strömen mit einem Shunt geringen Widerstandswerden so die gemessenen Stromstärken deutlich verfälscht; gleiches gilt für Temperatur-messsignale, die einen geringen Spannungspegel aufweisen. Das in DE 102004003198 A1 dargestellte System verwendet explizit eine gemeinsame Referenzspannungsquelle für eine gemeinsame Spannungsversorgung aller Komponenten der Berechnungseinheit. Der da-durch entstehende Fehler durch Spannungsversatz aufgrund der Führung der Versorgungs-leitung bzw. durch induzierte Störsignale, der sich durch die unterschiedlichen Spannungs-potentiale und die übermittelbare Verbindung der beiden Versorgungsmassen ergibt, wird in diesen Dokumenten nicht diskutiert.

Die US 5,773,962 bezieht sich auf eine Überwachungseinrichtung für Hochvoltbatterien, insbesondere eine Batteriebank mit einem Batterieenergiemanagementsystem. Sensoreinrichtungen erfassen in einzelnen Zellen oder Batterien Daten, welche einem jeweiligen Batterieüberwachungsmodul zugeleitet werden und über ein galvanisch isolierten Kommunikationsbus des Weiteren einer Datenverarbeitung zugeleitet werden.

Aus der WO 99/27628 A1 geht eine Akkumulatorüberwachungseinrichtung hervor. Ein Messmodul ist mit einer jeden Batterie oder einer kleinen Gruppe von Batterien oder Batteriezellen verbunden, welches neben anderen Parametern die Zellspannung und die Zelltemperatur misst. Diese Daten werden digital kodiert und über einen Bus an eine zentrale Prozesseinheit übermittel, welches diese Daten speichert und analysiert und aus diesen Informationen den Status einer jeden Batterie bzw. Batteriezelle ableitet und gegebenenfalls ein Alarmsignal erzeugt.

### Offenbarung der Erfindung

Die Erfindung ermöglicht mit einfachen Komponenten und ohne zusätzlichen Platzbedarf eine Unterdrückung eines Messfehlers in einer Akkumulatorüberwachungseinrichtung. Die Erfindung erfordert nur geringfügige Änderungen von bereits bekannten Systemen, dadurch ergeben sich eine einfache Implementierung in bereits vorhandene Systeme. Mit der Erfindung ist es möglich, lediglich die Sensorelemente selbst, d.h. beispielsweise nur passive Bauteile an dem Akkumulator vorzusehen, so dass der geringe Platzbedarf leicht durch eine Nische am Akkumulatorpol gedeckt werden kann, wie sie beispielsweise bei Bleiakkumulatoren üblich ist. Insbesondere ermöglicht die Erfindung die Verwendung von Shunts mit geringem Widerstand, so dass sich auch bei hohen Strömen nur eine unwesentliche Wärmeentwicklung ergibt. Gleichzeitig wird trotz des geringen Shunt-Widerstands und somit der geringen Signalamplitude des Strommesssignals kein zusätzlicher Fehler durch die Überleitung der Messsignale eingeführt; vielmehr ermöglicht die Erfindung, dass weitgehende Unterdrückung von Fehlern, die sie durch lange Leitungen zwischen Batteriepotential und Potentialebene der Stromversorgung der Auswertungsschaltungen verwendet wird. Durch die erfindungsgemäße Abtrennung des Potentials der Datenverarbeitungsschaltung von der Erfassungsschaltung, die Messsignale der Sensoreinrichtung aufbereitet, werden Fehler und Störsignale unterdrückt, die sich ansonsten durch die Leitungsführung der Versorgungsleitung der Datenverarbeitungsschaltung ergeben. Die erfindungsgemäße Potential-Trennschaltung und deren Anordnung trennt die Potentialebene zwischen Datenverarbeitungsschaltung und Erfassungsschaltung, wobei der zwischen diesen Schaltungen vorgesehene Datenverkehr für eine Potentialverschiebung oder für Störsignale relativ unempfindlich ist. Auch bei einer analogen Übertragung zwischen Erfassungsschaltung und Datenverarbeitungsschaltung ergeben sich durch die verwendeten hohen Pegel nur geringe relative Fehler, selbst wenn durch die Leitungsführung der Stromversorgung der Datenverarbeitungsschaltung bzw. der Erfassungsschaltung starke Störsignale entstehen können.

Die erfindungsgemäße Akkumulatorüberwachungseinrichtung umfasst daher eine Sensoreinrichtung, die an einem Akkumulator, vorzugsweise einer Autobatterie innerhalb eines Kfz-Motorraums angeordnet ist und elektrisch mit dem Akkumulator verbunden ist. Die Erfassung einiger Betriebsgrößen des Akkumulators wird dadurch gewährleistet, ohne das eine räumliche Distanz zwischen Sensoreinrichtung und Akkumulator einen Fehler induzieren kann. Um auch Sensoren in der Sensoreinrichtung zu verwenden, die einen geringen Signalpegel erzeugen, beispielsweise Shunt-Widerstände, Thermoelemente oder auch andere Sensoren, die mit einem geringen Strom beaufschlagt werden oder die eine geringe Empfindlichkeit aufweisen, ist eine Erfassungsschaltung über eine Potential-Trennschaltung von einer Datenverarbeitungsschaltung getrennt. Die von der Sensoreinrichtung erzeugten Signale werden über eine Kabelverbindung an die Erfassungsschaltung übertragen. Dadurch kann die Erfassungsschaltung mit der Datenverarbeitungsschaltung integriert werden, und die Sensoreinrichtung kann mit einem geringen Platzbedarf ausgeführt werden.

Um jedoch zu vermeiden, dass durch die Kabelverbindung die oben genannten Messfehler auftreten, ist zunächst die Erfassungsschaltung galvanisch mit der Sensoreinrichtung gekoppelt, und die Erfassungsschaltung ist über eine Potential-Trennschaltung mit der Datenverarbeitungsschaltung verbunden, die die von der Erfassungsschaltung aufbereiteten Signale weiter verarbeitet. Die Erfassungsschaltung bereitet üblicherweise die Signale der Sensoreinrichtung durch Verstärkung und/oder durch Analog/Digital-Wandlung auf, so dass die von der Erfassungsschaltung an die Datenverarbeitungsschaltung abgegebenen aufbereiteten Signale deutlich weniger störanfällig sind. Auf Grund dessen kann die zwischen Datenverarbeitungsschaltung und Erfassungsschaltung eingeführte Potential-Trennschaltung nur einen geringen Fehler, wenn überhaupt einführen, beispielsweise bei Übertragung in Form von Digitalsignalen zwischen Erfassungsschaltung und Datenverarbeitungsschaltung erzeugt ein Spannungsversatz keinen zusätzlichen Fehler. Selbst wenn starke Fehler zwischen Erfassungsschaltung und Datenverarbeitungsschaltung eingeführt werden, können diese einfach kompensiert werden, indem die Übertragung kapazitiv erfolgt. Hier ist zu bemerken, dass eine derartige kapazitive Entkopplung bei den Messsignalen, wie sie von der Sensoreinrichtung abgegeben werden, nicht möglich ist, und das Signal grundlegend verändert würde. Insbesondere bei der Verwendung von Spannungs-, Strom- und Temperatursensoren, die im Wesentlichen Gleichspannungen abgeben, ist eine kapazitive Trennung zwischen Sensoreinrichtung und Erfassungsschaltung nicht möglich.

Die Potential-Trennschaltung trennt somit vorzugsweise die Potentialebene der Stromversorgung der Erfassungsschaltung, die der Potentialebene der Sensoreinrichtung entspricht, von der Potentialebene der Stromversorgung der Datenverarbeitungsschaltung. In gleicher Weise können sich die Potentialebenen auf die jeweiligen Messeingänge bzw. -Ausgänge beziehen, wobei diese abhängig von der Schaltung zum Teil identisch zu dem Potential der Spannungsversorgung sind. Die Potential-Trennschaltung trennt somit den Datenverbrennungsabschnitt der Überwachungseinrichtung von dem Mess- und Aufbereitungsabschnitt, der von der Sensoreinrichtung und Erfassungsschaltung vorgesehen wird. Im Gegensatz zu der bisher üblichen Trennung zwischen Erfassungsschaltung und Sensoreinrichtung kann somit der oben beschriebene Messfehler vermieden werden.

Die Potential-Trennschaltung ist im einfachsten Fall als serielle Kapazität ausgeführt, kann jedoch prinzipiell von beliebigen Hochpassschaltungen umgesetzt werden, wobei jedoch gewährleistet sein muss, dass insbesondere die Gleichanteile oder Wechselanteile unterhalb einer bestimmten Frequenz im Wesentlichen nicht übertragen werden, wohingegen vorzugsweise Wechselanteile über einer bestimmten Frequenz im Wesentlichen übertragen werden, um in die Sensoreinrichtung, in die Kabelverbindung und/oder in die Erfassungsschaltung induzierte Wechselspannungen oder -ströme in die Stromversorgung der Datenverarbeitungsschaltung abzuleiten, und um in der Datenverarbeitungsschaltung erzeugte Wechselanteile an die Masse der Erfassungsschaltung bzw. der Sensoreinrichtung bzw. an die Masse eines Bordnetzes des Kraftfahrzeugs abzuleiten. Hierbei ist zu bemerken, dass eine hochfrequente Kopplung durch die Potential-Trennschaltung deshalb nicht kritisch ist, weil die von der Sensoreinrichtung erzeugten Signale Größen betreffen, die sich nur sehr langsam, d.h. im Wesentlichen als Gleichanteil ändern. Der Nutzanteil der Signale lässt sich daher durch einen Tiefpass sehr einfach vom Störanteil trennen. Gleichzeitig bewirkt ein zwischen der Erfassungsschaltung und der Datenverarbeitungsschaltung erzeugter Gleichspannungsversatz keine Störung, da der Versatz die jeweilige Versorgungsspannung betrifft, die üblicherweise geregelt ist und auch bei Abweichungen den Betrieb der jeweiligen Komponenten nicht stört. Hierbei ist zu bemerken, dass im Gegensatz hierzu eine Abweichung bei Messsignalen mit geringem Pegel ein Gleichspannungsversatz deutliche Auswirkungen hat, da insbesondere der Gleichanteil der Messsignale erfasst werden soll, wobei ein Gleichspannungsversatz in Spannungsversorgungssystemen auch bei größeren Potential-Differenzen üblicherweise von einer Spannungsregelung abgefangen wird.

Die Potentialtrennschaltung ist vorzugsweise zwischen der Masse der Erfassungsschaltung (bzw. der Sensoreinrichtung) und der Masse der Datenverarbeitungsschaltung vorgesehen, vorzugsweise zwischen den Massen der jeweiligen Spannungsversorgungen bzw. zwischen den Massen der Spannungsversorgung und der Erfassungsschaltung und der Masse des Analog- oder Digitalsignaleingangs der Datenverarbeitungsschaltung, oder zwischen der Messsignalmasse der Erfassungsschaltung und der Messsignalmasse der Datenverarbeitungsschaltung bzw. der Versorgungsschaltung der Datenverarbeitungsschaltung.

Prinzipiell können auch die Pluspole, d.h. die Versorgungsspannungs-Potentialebenen der jeweiligen Schaltungsteile durch die Potential-Trennschaltung voneinander getrennt sein, wobei eine derartige Trennung dann entsprechen zwischen den Schaltungsabschnitten vorgesehen wird, wie sie oben im Rahmen der Massetrennung beschrieben sind.

Die Datenverarbeitungsschaltung und die Erfassungsschaltung können als gemeinsame Baugruppe angeordnet sein, wobei die Baugruppe über die Kabelverbindung mit der Sensoreinrichtung verbunden ist. Innerhalb der Baugruppe sind dann die Datenverarbeitungsschaltung und die Erfassungsschaltung über die Potential-Trennschaltung voneinander getrennt, soweit es zumindest den Gleichanteil betrifft. In gleicher Weise können die Datenverarbeitungsschaltung und die Erfassungsschaltung von einem gemeinsamen Gehäuse eingefasst bzw. umschlossen werden und innerhalb diesem befestigt sein. Elektrische Verbindungselemente können in dem Gehäuse eingelassen oder an dem Gehäuse befestigt sein, wobei die Verbindungselemente mit der Erfassungsschaltung (und somit auch indirekt mit der Datenverarbeitungsschaltung) verbunden sind. Die elektrischen Verbindungselemente dienen dann dem Anschluss der Sensoreinrichtung über die Kabelverbindung. Die Kabelverbindung hat in diesem Fall die komplementäre Verbindungselemente, die mit den Verbindungselementen des Gehäuses elektrisch verbunden werden können.

Grundsätzlich dient die Potential-Trennschaltung der Trennung der Gleichanteile, wobei in diesem Zusammenhang Gleichanteile die Spannungskomponenten bzw. Potentials-Komponenten bezeichnet, die durch die oben beschriebene Leitungsführung zwischen der Potentialebene der Sensoreinrichtung und der Potentialebene der Versorgungsspannungen der Datenverarbeitungsschaltung eingeführt werden, und die nur Frequenzen unterhalb einer bestimmten Grenzfrequenz umfassen. Die Grenzfrequenz bezeichnet die Trennung zwischen Gleichanteil und Wechselanteil, wobei dies nur theoretisch eine Grenze von 0 Hz bedeutet, und praktisch einen Bereich von größer als 0 Hz und höchstens 1Hz, 5 Hz oder 10 Hz von einem Bereich oberhalb der jeweiligen oberen Grenze trennt. Es ist zu bemerken, dass die Potential-Trennschaltung ferner vorgesehen ist, über einer Grenzfrequenz, die Gleichanteile von Wechselanteilen trennt, zu übertragen, um den Einfluss von Störsignalen durch Ableitung nach Masse zu unterbinden. Insbesondere bei hohen Frequenzen würde eine Potential-Trennschaltung, die die jeweiligen Massen vollständig voneinander trennt, zwei jeweils an einem Ende nicht geerdete Leitungen erzeugen, die insbesondere für induzierte Störsignale anfällig sind.

Grundsätzlich können der Strom, die Temperatur oder ein Potential bzw. eine Spannung des Akkumulators gemessen werden, wobei auch bei der Messung der Klemmspannung des Akkumulators dann Messsignale mit geringem Pegel auftreten können, wenn ein entsprechender Vorwiderstand oder ein entsprechender Spannungsteiler verwendet wird. Als Stromsensor eignen sich ein Shunt-Widerstand oder auch Magnetsensoren bzw. Hall-Sensoren bzw. Hall-Widerstände. Abhängig vom Strom und der Art des Sensors sind insbesondere derartige Stromsensoren durch Messfehler auf Grund von Potentialversatz gefährdet, so dass die Erfindung insbesondere bei der Verwendung dieser Sensoren das Potential wie beschrieben trennen sollte.

In gleicher Weise kann als Temperatursensor ein Temperatur-Halbleitersensor, ein NTC-Widerstand oder en PTC-Widerstand verwendet werden, oder auch ein Thermoelement. Abhängig von der Beschaltung erzeugen auch derartige Temperatursensoren Signale mit geringem Pegel, die ohne eine erfindungsgemäße Beschaltung wesentlichen Messfehlern ausgesetzt sind.

Als Spannungssensor kann ein Abgriff des Akkumulator-Pluspols verwendet werden, oder auch ein Spannungsteiler oder ein Vorwiderstand, der mit dem Pluspol verbunden ist. Abhängig von der Bemessung des Spannungsteilers und des Vorwiderstands können auch bei üblichen Batteriespannungen wie 12, 24 oder 48 Volt derart geringe Messsignale erzeugt werden, dass diese zur Vermeidung von zusätzlichen Messfehlern mit der erfindungsgemä-βen Beschaltung vor Störsignaleinflüssen geschützt werden müssen.

Bei der Verwendung von Shunts von beispielsweise 1 µΩ - 1 Ω, 10 µΩ - 10 µΩ, 10 10 µΩ - 1 mΩ oder ca. 100 µΩ ergeben sich so messbare Spannungen von Nanovolt- bis Mikrovoltbereich. Da somit auch geringfügige Spannungsabfälle an Kontaktübergängen oder Leitungen relevant sind, werden vorzugsweise zur Ausbildung der Kabelverbindung Goldkontakte verwendet, die beispielsweise zur Beschichtung von Steckverbindungen verwendet werden. Die erfindungsgemäße Akkumulatorüberwachungseinrichtung ermöglicht so eine Überbrückung von größeren Distanzen zwischen Sensoreinrichtung und Erfassungsschaltung, ohne dass ein durch die Distanz eingeführter Potentialversatz zu Messfehlerproblemen führt. Somit können Sensoreinrichtung und Erfassungsschaltung bzw. Datenverarbeitungsschaltung mit einer deutlichen räumlichen Distanz vorgesehen werden, beispielsweise innerhalb des Motorraums, wobei auch Kabelverbindungen mit einer Länge von mindestens 0,5 m, mindestens 1 m, mindestens 2 m, mindestens 5 m oder mindestens 10 m durch die erfindungsgemäße Potential-Trennschaltung auch schwache Messsignale kaum verfälschen. Durch diese Kabellänge, die sich aus der Kabellänge zwischen Sensoreinrichtung und Kfz-Akkumulator und Kabellänge zwischen Kfz-Akkumulator und Erfassungsschaltung bzw. Datenverarbeitungsschaltung bzw. gemeinsame Baugruppe zusammensetzt, können sowohl Sensoreinrichtung als auch Erfassungsschaltung bzw. Datenverarbeitungsschaltung bzw. gemeinsame Baugruppe sehr flexibel innerhalb eines Fahrzeugs vorgesehen werden. Trotz einer flexiblen oder komplexen Verkabelung ergeben sich auf Grund der erfindungsgemäßen Potential-Trennschaltung keine wesentlichen Nachteile für die von der Sensoreinrichtung erfassten Messsignale.

Das der Erfindung zu Grunde liegende Konzept wird ferner von einem entsprechenden Verfahren zur störungsfreien elektrischen Kopplung einer Sensoreinrichtung mit einer Erfassungsschaltung umgesetzt, bei der die einzelnen Komponenten wie oben beschrieben verbunden sein können. Erfindungsgemäß wird somit die Sensoreinrichtung über die Kabelverbindung mit der Erfassungsschaltung verbunden, die Datenverarbeitungsschaltung mit der Erfassungsschaltung ebenso verbunden oder integriert, wobei jedoch zwischen den jeweiligen Potentialebenen (Potentialebene der Erfassungsschaltung und Potentialebene der Datenverarbeitungsschaltung) eine erfindungsgemäße Potential-Trennschaltung vorgesehen ist, die die Gleichanteile zwischen den beiden Potentialebenen trennt. Das Trennen wird somit vorgesehen, indem eine Kapazität zwischen die beiden Potentialebenen eingeschaltet wird; die Datenverarbeitungsschaltung und die Erfassungsschaltung können so in einer gemeinsamen Baugruppe angeordnet werden oder miteinander integriert werden, sofern die Potential-Trennschaltung zur Trennung vorgesehen ist. Bei einer Integration in der Datenverarbeitungsschaltung der Erfassungsschaltung in einem gemeinsamen Gehäuse werden vorzugsweise die Erfassungsschaltung über Verbindungselemente und außerhalb des Gehäuses angeordnete Kabelverbindungen an die Sensoreinrichtung angeschlossen. Das Anschließen wird vorzugsweise über Steckkontakte vorgesehen, oder über andere Verbindungselemente, die beispielsweise parallel und komplementär an jeder entsprechenden Schnittstelle ausgeführt sein können. Das Verfahren umfasst ferner vorzugsweise die Erzeugung von Messsignalen durch die Sensoreinrichtung, die wie oben beschrieben ausgeführt sein kann. Um die entsprechende Größe zu messen ist der entsprechende Sensor vorzugsweise direkt am Akkumulator angeordnet; daher wird zum Erfassen der Temperatur ein Temperatursensor direkt an den Akkumulator beim Übertragen angebracht; zur Erfassung des Stroms wird ein Shunt-Widerstand direkt an einen Pol des Akkumulators angeschlossen. Die erfindungsgemäße räumliche Trennung zwischen Sensoreinrichtung und Verfassungsschaltung/ Datenverarbeitungsschaltung ermöglicht eine hohe Flexibilität hinsichtlich Anordnung der Komponenten und Verkabelung.

Die Erfindung ist grundsätzlich für den Anschluss und die Auswertung von Sensoreinrichtungen geeignet, die Signale mit geringem Pegel erzeugen. Signale mit geringem Pegel sind beispielsweise Signale in einem Spannungsbereich von nV, µV oder einigen mV, insbesondere ist die Erfindung für Sensoreinrichtungen geeignet, die Messspannungen liefern, welche sich maximal um nur einen geringen Bereich unterscheiden, beispielsweise um Intervalle im Nanovoltbereich, Mikrovoltbereich oder Millivoltbereich; Signale mit geringem Pegel sind daher auch Spannungssignale zu verstehen, die möglicherweise eine gewisse Grundspannung liefern, jedoch auf Grund ihrer Aufgabe und ihres Einsatzes um diesen Grundwert nur geringfügig schwanken , beispielsweise bei Sensoren mit geringer Empfindlichkeit wie Thermoelemente.

### Kurze Beschreibung der Zeichnungen

Ausführungsbeispiele der Erfindungen sind in der Zeichnung dargestellt und in der nachfolgenden Beschreibung näher erläutert.

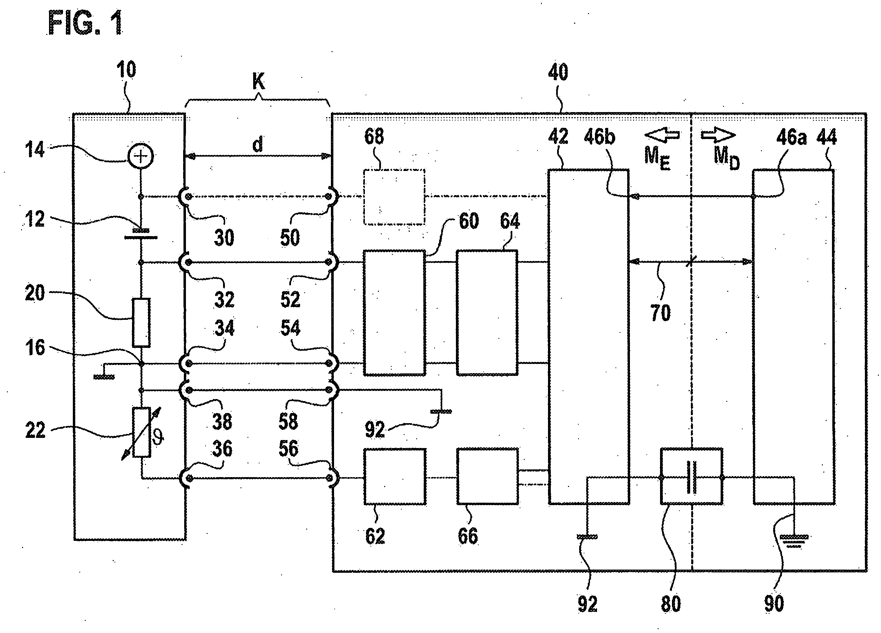

Es zeigt
- Figur 1: eine erfindungsgemäße Akkumulatorüberwachungseinrichtung in einigen Varianten mit verschiedenen Sensoren.

Die Figur 1 zeigt ein Akkumulatorabschnitt 10 mit einem Akkumulator 12 und einem Pluspolanschluss 14. Ein entsprechender Minuspolanschluss 16 stellt die Masse der Potentialebene des Akkumulators bzw. der Sensoreinrichtung dar. Die Sensoreinrichtung umfasst einen Shunt-Widerstand 20 sowie einen (optionalen) Temperatursensor 22. Der Temperatursensor 22 ist mit dem Minuspolanschluss 16 verbunden, so dass der Minuspolanschluss sowohl für den Shunt-Widerstand als auch für den Temperatursensor verwendet werden kann, wodurch eine Leitung gespart werden kann. Die Akkumulatoreinheit 10 umfasst daher einen Pluspolanschluss 30, einen Abgriff 32, der zwischen der negativen Elektrode des Akkumulators und dem Shunt-Widerstand 20 angeschlossen ist, sowie einen Minuspolabgriff 34, der die Masse der Akkumulatoreinheit 10 widerspiegelt, sowie einen Temperatursensoranschluss 36.

In einer ersten Ausführung weist die Erfindung nur einen Sensor auf, d.h. den Shunt-Widerstand 20, wodurch die Anschlüsse 30 und 36 nicht zur Erfassung von Betriebsgrößen erforderlich sind. Eine weitere Ausführung umfasst lediglich den Temperatursensor 22, sowie die Anschlüsse 36 und 34, nicht jedoch die Anschlüsse 30 und 32. In einer besonders bevorzugten Ausführungsform sind sowohl Temperatursensor 22 als auch Shunt-Widerstand 20 vorgesehen, wobei beide über den Anschluss 34 mit einer weiteren Masse verbunden werden können, und beide Sensoren zudem noch einen Anschluss, d.h. 32 bzw. 36 aufweisen, dessen Potential gegenüber dem Anschluss 34 die jeweilige Betriebsgröße, d.h. Strom und Temperatur, angibt. Der Stromsensor 20 (Shunt-Widerstand) und der Temperatursensor 22 teilen sich somit einen gemeinsamen Masseanschluss 38.

Mit der Akkumulatoreinrichtung 10, deren Komponenten alle in unmittelbarer Nähe zum Akkumulator vorgesehen sind, ist eine Erfassungs- und Datenverarbeitungseinheit 40 angeschlossen, die eine Erfassungsschaltung 42 und eine Datenverarbeitungsschaltung 44 umfasst. Die Erfassungsschaltung 42 ist ein Analogschaltkreis oder ein Analog/Digitalschaltkreis oder ein Mikrocontroller, der Messdaten erfasst und vorverarbeitet. Die Einheit 40, die auch als Baugruppe aufgefasst werden kann, weist ferner Anschlüsse 50-56 auf, die zur Übertragung von Messsignalen der Sensoreinrichtung dienen. Anschluss 50 dient zur Erfassung der Akkumulatorspannung bzw. des Pluspolpotentials des Akkumulators, Anschluss 52 und Anschluss 54 dienen zur Erfassung des Stroms durch Messung der Spannung, die über den Shunt-Widerstand 20 abfällt, wobei der Anschluss 54 auch zusammen mit dem Anschluss 56 verwendet wird, wobei der Anschluss 56 zur Erfassung des Messsignals des Temperatursensors verwendet wird. Ferner wird beispielsweise zu Abschirmungszwecken oder zur Störsignalableitung nach Masse die Masse der Akkumulatoreinheit 10 über den Anschluss 38 mit der Masse der Erfassungsschaltung 42 über den Masseanschluss 58 verbunden. Innerhalb der Einheit 40 ist der Masseanschluss 58 mit der Masse der Versorgungsspannung der Erfassungsschaltung 42 verbunden. Zwischen den einzelnen Anschlüssen zur Aufnahme der Messsignale 50-56 und der eigentlichen Erfassungsschaltung sind noch zusätzliche Eingangsfilter 60, 62 sowie Überspannungsschutzschaltungen 64, 66 zwischengeschaltet. Ein optionaler Überspannungsschutz 68 für den Anschluss der Spannungserfassung über den Anschluss 50 kann optional vorgesehen werden. Dieser verbindet den Pluspol des Akkumulators mit der Erfassungsschaltung 42. Grundsätzlich können die Filter und Überspannungsschutzschaltungen 60-68 auch zu der Erfassungsschaltung 42 gerechnet werden.

Die Erfassungs- und Datenverarbeitungseinheit 40 umfasst ferner eine Datenverarbeitungsschaltung 44, die über einen Anschluss 46a die Erfassungsschaltung 42 über deren Versorgungsspannungsanschluss 46b mit Versorgungsspannung versorgt. Der Eingang 46b kann auch optional als Spannungserfassung anstatt dem Anschluss 50 verwendet werden. In diesem Fall kann die Verbindung 30-50 entfallen. Die Verbindung zwischen dem Versorgungsspannungsausgang 46a und dem Versorgungsspannungseingang 46b kann direkt sein und eine galvanische Verbindung darstellen. Ferner sind die Erfassungsschaltung 42 und die Datenverarbeitungsschaltung 44 über eine Datenübertragungsverbindung 70 miteinander verbunden. Dies ist vorzugsweise ein serieller oder paralleler Datenbus, auf dem digitale Daten ausgetauscht werden (vorzugsweise von der Erfassungsschaltung zur Datenverarbeitungsschaltung, oder auch in beiderlei Richtungen). Die Verbindung 70 kann durch ein LIN-Bus vorgesehen sein, oder durch eine einfachere Open-Collector-Schaltung als Treiberschaltung. Grundsätzlich können auch analoge Signale übertragen werden, die das jeweilige Messsignal wiedergeben, soweit diese von der Erfassungsschaltung 42 aufbereitet wurden und gegenüber den Messsignalen der Sensoreinrichtung einen deutlichen Spannungspegel aufweisen. Grundsätzlich sind jedoch digitale Verbindungen bevorzugt, wobei auch CAN-Protokolle verwendet werden können.

Erfindungsgemäß wird die Potentialebene M_{E} der Erfassungsschaltung von der Potentialebene der Datenverarbeitungsschaltung M_{D} entlang der in Figur 1 gestrichelt dargestellten Line getrennt, in dem die beiden Massenpotentiale über die Potential-Trennschaltung 80 miteinander verbunden werden und für Signale mit Gleichanteil getrennt werden. Die Masse der Datenverarbeitungsschaltung 90 ist über eine erste Verkabelung (nicht dargestellt) beispielsweise über das Bordnetz mit dem Akkumulator 12 verbunden, wobei die Masse der Datenverarbeitungsschaltung 92 über die Kabelverbindung K zwischen den Anschlüssen der Erfassungsschaltung 40 und der Sensoreinrichtung 14, 20, 22 verbunden sind. Insbesondere erhält die Erfassungsschaltung 42 ein negatives Potential über den Anschluss 58, der direkt galvanisch über die Kabelverbindung K mit dem Anschluss 38 der Akkumulatoreinheit 10 verbunden ist, welche wiederum mit dem Minuspolanschluss 16 der Akkumulatoreinheit 10 verbunden ist. Auf diese Weise wird die Erfassungsschaltung 42 über die gleiche Kabelverbindung K mit Masse versorgt, über die auch die Sensoreinrichtungen mit der Erfassungsschaltung verbunden sind. Dadurch kann sich die Kabelverbindung K von der Verkabelung (nicht dargestellt) unterscheiden, die die Datenverarbeitungsschaltung 44 mit Masse versorgt. Die dadurch erreichte Flexibilität wird jedoch mit einem Potentialversatz zwischen Erfassungsschaltung und Datenverarbeitungsschaltung erkauft, die durch die erfindungsgemäße Potential-Trennschaltung 80 derart kompensiert wird, dass ein sich zwischen der Masse 90 und der Masse 92 einstellender Spannungsversatz durch die erfindungsgemäße Potential-Trennschaltung 80 aufgenommen und unschädlich gemacht wird. Der Potentialversatz hat somit keine Auswirkung auf die über die Kabelverbindung K übertragenen Messsignale, da diese in der gleichen Masse-Potentialebene M_{E} vorgesehen sind, in der auch die Erfassungsschaltung arbeitet (bzw. mit der die Erfassungsschaltung versorgt wird). Die Potential-Trennschaltung 80 kann besonders einfach als serieller Kondensator vorgesehen werden oder alternativ durch mehrere parallel geschaltete Kondensatoren vorgesehen werden, der die Masse 92 mit der Masse 90 verbindet. Durch diese Verbindung werden weitere Störungen unterdrückt, die ansonsten durch zwei verschiedene Verkabelungen, die voneinander getrennt sind, erzeugt werden würden. Parallel zur Potential-Trennschaltung kann verkabelungsbedingt ein Widerstand vorgesehen sein, der sich zwischen Polklemme und Gehäuse ergibt. Vorzugsweise ist die Verkabelung zwischen den Anschlüssen 52/54 und 32/34 verdrillt. Der Überspannungsschutz 64 ist vorzugsweise über einen Differenzial-Iₛₑₙₛₑ-Anschluss der Erfassungsschaltung 42 verbunden. Zwischen dem Überspannungsschutz 66 und der Erfassungsschaltung 42 bestehen vorzugsweise Verbindungen zum einen für die Temperaturspannung, die über Anschlüsse übertragen wird, sowie eine gepunktete dargestellte Verbindung zwischen dem Überspannungsschutz 66 und dem Versorgungsspannungsanschluss des Analogteils von Erfassungsschaltung 42.

Vorzugsweise ist die Erfassungs- und Datenverarbeitungseinheit 40 in einem Metallgehäuse oder Kunststoffgehäuse vorgesehen, das über Anschluss 58 elektrisch über den Masseanschluss 38 mit der Akkumulatoreinheit 10 verbunden ist. Die Anschlüsse 50-58 sind vorzugsweise innerhalb einer Steckverbindungseinheit vorgesehen, die in dem Gehäuse der Erfassungs- und Datenverarbeitungseinheit 40 eingelassen ist. In gleicher Weise sind die Anschlüsse 30-38 vorzugsweise als Steckkontakte vorgesehen, wobei die Kabelverbindung K vorzugsweise vorgesehen ist, um die Steckverbindungen der Anschlüsse 50-58 mit den Steckverbindungen 30-38 jeweils elektrisch zu kontaktieren.

## Patentansprüche

1. Akkumulatorüberwachungseinrichtung, umfassend:
eine an einem Kfz-Akkumulator (12) elektrisch anschließbare und an diesem angeordnete Sensoreinrichtung (20, 22), die zur Erfassung einer
Betriebsgröße des Akkumulator (12) eingerichtet ist;
eine Erfassungsschaltung (42), die über eine Kabelverbindung mit der Sensoreinrichtung (20, 22)verbunden ist; und
eine Datenverarbeitungsschaltung (44), die über eine Potential-Trennschaltung (80) mit der Erfassungsschaltung (42) verbunden ist, wobei die Potential-Trennschaltung (80) eine Potentialebene (M_{E}) der
Erfassungsschaltung (42) und eine Potentialebene (M_{D}) der Datenverarbeitungsschaltung (44) für Gleichspannungsanteile voneinander trennt und für Wechselspannungsanteile miteinander verbindet, wobei
die Datenverarbeitungsschaltung (44) und die Erfassungsschaltung (42) als eine gemeinsame Baugruppe (40) angeordnet sind, die über die
Kabelverbindung (K) mit der Sensoreinrichtung (20, 22) verbunden ist, oder
die Datenverarbeitungsschaltung (44) und die Erfassungsschaltung (42)von einem gemeinsamen Gehäuse (40) mit elektrischen Verbindungselementen (52 - 58) umschlossen werden, die innerhalb des Gehäuses (40) mit der Erfassungsschaltung (42) und über die außerhalb des Gehäuses (40) angeordnete Kabelverbindung (K) mit der Sensoreinrichtung (20, 22) verbunden ist.

2. Akkumulatorüberwachungseinrichtung nach Anspruch 1, wobei die Potential-Trennschaltung (80) eine seriell zwischen die Potentialebenen geschaltete Kapazität oder einen Hochpass umfasst, und ferner die Potential-Trennschaltung eine Versorgungsspannungs-Potentialebene der
Erfassungsschaltung (42) mit einer Versorgungsspannungs-Potentialebene der Datenverarbeitungsschaltung (44) seriell verbindet, oder die Potential-Trennschaltung (80) eine Masse-Potentialebene der Erfassungsschaltung (42) mit einer Masse-Potentialebene der Datenverarbeitungsschaltung (44) seriell verbindet.

3. Akkumulatorüberwachungseinrichtung nach einem der vorangehenden Ansprüche, wobei die Betriebsgröße ein von dem Kfz-Akkumulator (12) gelieferter oder zu diesem fließender Strom, eine Temperatur des Akkumulators, ein Potential des Akkumulators (12) oder eine am Akkumulator (12) anliegende Spannung ist, und die Sensoreinrichtung (20, 22) mindestens einen der folgenden Sensoren umfasst: einen Stromsensor (20) eingerichtet zur Erfassung des Stroms, einen Temperatursensor (22) eingerichtet zur Erfassung der Temperatur, und ein Spannungssensor (30) eingerichtet zur Erfassung des Potential oder der Spannung des Akkumulators; und wobei der Stromsensor ein Shuntwiderstand ist, der einen Akkumulator-Minuspol mit einem Masse-Bordnetzanschluss (16) verbindet oder der einen Akkumulator-Pluspol (14) mit einem Versorgungspotential-Bordnetzanschluss verbindet, oder der Stromsensor ein Magnetsensor oder Hallsensor ist, der die Stärke eines Magnetfelds erfasst, das von dem Strom erzeugt wird; der Temperatursensor ein Temperatur-Halbleitersensor, ein NTC-Widerstand oder PCT-Widerstand ist, der mit dem Akkumulator (12) in wärmeübertragendem Kontakt steht, um dessen Betriebstemperatur zu erfassen; und der Spannungssensor einen Abgriff (30) umfasst, der mit dem Akkumulator-Pluspol (14) unmittelbar, über einen Spannungsteiler oder über einen Vorwiderstand elektrisch verbunden ist.

4. Akkumulatorüberwachungseinrichtung nach einem der vorangehenden Ansprüche, wobei die Sensoreinrichtung unmittelbar an dem Akkumulator (12) angeordnet ist und die Erfassungsschaltung (42) über Steckverbindungen (30 - 38; 50 - 58) und einem Kabel (K) mit einer Länge von mindestens 0,5 m, mindestens 1 m, mindestens 2 m, mindestens 5 m oder mindestens 10 m mit der Sensoreinrichtung verbunden ist.

5. Verfahren zur störungsfreien elektrischen Kopplung einer Sensoreinrichtung (20, 22), die Betriebsgrößen eines Kfz-Akkumulators (12) erfasst und an dem Akkumulator (12) angeordnet ist, mit einer Erfassungsschaltung (42), und einer Datenverarbeitungsschaltung, umfassend:
Verbinden der Sensoreinrichtung (20, 22) mit der dazu entfernt angeordneten Erfassungsschaltung (42) über eine Kabelverbindung (K); und
Verbinden der Datenverarbeitungsschaltung (44) mit der Erfassungsschaltung (42) mittels Verbinden einer Potentialebene (M_{E}) der Erfassungsschaltung (42) mit einer Potentialebene (M_{D}) der Datenverarbeitungsschaltung (44) für Wechselspannungsanteile; und
Trennen der Potentialebene (M_{E}) der Erfassungsschaltung (42) von der Potentialebene (M_{D}) der Datenverarbeitungsschaltung (44) für Gleichspannungsanteile mittels einer Potential-Trennschaltung (80), die zwischen die Potentialebenen in Serienschaltung eingefügt wird.

6. Verfahren nach Anspruch 5, wobei die Potentialebenen (M_{E}, M_{D}) voneinander getrennt werden mittels einer seriell zwischen die Potentialebenen geschaltete Kapazität oder mittels eines zwischen die Potentialebenen geschalteten, wobei die Potentialebenen jeweils Versorgungsspannungs-Potentialebenen oder Masse-Potentialebenen der Erfassungsschaltung (42) bzw. der Datenverarbeitungsschaltung (44) sind.

7. Verfahren nach Anspruch 5 oder 6, das ferner umfasst: Anordnen der Datenverarbeitungsschaltung (44) und der Erfassungsschaltung (42) in einer gemeinsamen Baugruppe (40), die über die Kabelverbindung (K) mit der Sensoreinrichtung (20; 22) verbunden wird, oder Befestigen der Datenverarbeitungsschaltung (44) und der Erfassungsschaltung (42) in einem gemeinsamen Gehäuse (40), das elektrische Verbindungselemente (50 - 58) aufweist; Verbinden der Verbindungselemente innerhalb des Gehäuses mit der Erfassungsschaltung (42); und Verbinden der Verbindungselemente (50 - 58) außerhalb des Gehäuses (40) durch Anschließen der außerhalb angeordneten Kabelverbindung (K) an die Sensoreneinrichtung (20; 22) sowie an die Verbindungselemente (50 - 58).

8. Verfahren nach einem der Ansprüche 5 - 7, wobei als Betriebsgröße ein von dem Kfz-Akkumulator (12) gelieferter oder zu diesem fließender Strom, eine Temperatur des Akkumulators (12), ein Potential des Akkumulators (12) oder eine am Akkumulator anliegende Spannung gemessen wird mittels Sensoreinrichtungen (20, 22), und das Erfassen der Betriebsgrössen durchgeführt wird mittels einem Stromsensor, Temperatursensor, oder Spannungssensor, wobei der Stromsensor ein Shuntwiderstand ist, durch den der zu erfassende Strom gelenkt wird, und der einen Akkumulator-Minuspol mit einem Masse-Bordnetzanschluss (16) verbindet oder der einen Akkumulator-Pluspol (14) mit einem Versorgungspotential-Bordnetzanschluss verbindet; der Stromsensor ein Magnetsensor oder Hallsensor ist, der in einem Magnetfeld angeordnet ist, das von dem Strom erzeugt wird; der Temperatursensor ein Temperatur-Halbleitersensor, ein NTC-Widerstand oder PCT-Widerstand ist, der mit dem Akkumulator (12) wärmeübertragend in Kontakt gebracht wird, um dessen Betriebstemperatur zu erfassen; und der Spannungssensor einen Abgriff (30) umfasst, der mit einem Akkumulator-Pluspol (14) unmittelbar, über einen Spannungsteiler oder über einen Vorwiderstand elektrisch verbunden wird.

9. Verfahren nach einem der Ansprüche 5 - 8, wobei die Sensoreinrichtung (20; 22) unmittelbar an dem Akkumulator (12) angeordnet wird und die Erfassungsschaltung (42) mit der Sensoreinrichtung (20; 22) verbunden wird über Steckverbindungen (30 - 38; 50- 58) und einem Kabel (K) mit einer Länge von mindestens 0,5 m, mindestens 1 m, mindestens 2 m, mindestens 5 m oder mindestens 10 m verbunden wird und die Erfassungsschaltung (42) räumlich getrennt von der Sensoreinrichtung (20; 22) angeordnet wird.

## Claims

1. Rechargeable battery monitoring device, comprising:
a sensor device (20, 22) which can be electrically connected to a motor vehicle rechargeable battery (12) and is arranged on the said motor vehicle rechargeable battery and is designed to detect an operating variable of the rechargeable battery (12);
a detection circuit (42) which is connected to the sensor device (20, 22) via a cable connection; and
a data processing circuit (44) which is connected to the detection circuit (42) via a potential disconnection circuit (80), wherein the potential disconnection circuit (80) disconnects a potential level (M_{E}) of the detection circuit (42) and a potential level (M_{D}) of the data processing circuit (44) from one another for DC voltage components and connects them to one another for AC voltage components, wherein the data processing circuit (44) and the detection circuit (42) are arranged as a common assembly (40) which is connected to the sensor device (20, 22) via the cable connection (K), or the data processing circuit (44) and
the detection circuit (42) are surrounded by a common housing (40) having electrical connection elements (50-58) which are connected to the detection circuit (42) within the housing (40) and to the sensor device (20, 22) via the cable connection (K) which is arranged outside the housing (40).

2. Rechargeable battery monitoring device according to Claim 1, wherein the potential disconnection circuit (80) comprises a capacitor which is connected in series between the potential levels or a high-pass filter, and the potential disconnection circuit also connects a supply voltage potential level of the detection circuit (42) to a supply voltage potential level of the data processing circuit (44) in series, or the potential disconnection circuit (80) connects an earth potential level of the detection circuit (42) to an earth potential level of the data processing circuit (44) in series.

3. Rechargeable battery monitoring device according to either of the preceding claims, wherein the operating variable is a current which is delivered by the motor vehicle rechargeable battery (12) or is flowing to the said motor vehicle rechargeable battery, a temperature of the rechargeable battery, a potential of the rechargeable battery (12) or a voltage which is applied to the rechargeable battery (12), and the sensor device (20, 22) comprises at least one of the following sensors: a current sensor (20) which is designed to detect the current, a temperature sensor (22) which is designed to detect the temperature, and a voltage sensor (30) which is designed to detect the potential or the voltage of the rechargeable battery; and wherein the current sensor is a shunt resistor which connects a negative pole of the rechargeable battery to an earth connection (16) of the on-board electrical system or which connects a positive pole (14) of the rechargeable battery to a supply potential connection of the on-board electrical system, or the current sensor is a magnetic sensor or a Hall sensor which detects the strength of a magnetic field which is generated by the current; the temperature sensor is a temperature semiconductor sensor, an NTC resistor or a PTC resistor which forms a heat-transmitting contact-connection with the rechargeable battery (12) in order to detect the operating temperature of the said rechargeable battery; and the voltage sensor comprises a tap (30) which is directly electrically connected to the positive pole (14) of the rechargeable battery via a voltage divider or via a series resistor.

4. Rechargeable battery monitoring device according to one of the preceding claims, wherein the sensor device is arranged directly on the rechargeable battery (12) and the detection circuit (42) is connected to the sensor device via plug connections (30-38; 50-58) and a cable (K) having a length of at least 0.5 m, at least 1 m, at least 2 m, at least 5 m or at least 10 m.

5. Method for electrically coupling a sensor device (20, 22), which detects operating variables of a motor vehicle rechargeable battery (12) and is arranged on the rechargeable battery (12), without interference to a detection circuit (42) and a data processing circuit, comprising:
connecting the sensor device (20, 22) to the detection circuit (42), which is arranged at a distance from the said sensor device, via a cable connection (K); and
connecting the data processing circuit (44) to the detection circuit (42) by means of connecting a potential level (M_{E}) of the detection circuit (42) to a potential level (M_{D}) of the data processing circuit (44) for AC voltage components; and
disconnecting the potential level (M_{E}) of the detection circuit (42) from the potential level (M_{D}) of the data processing circuit (44) for DC voltage components by means of a potential disconnection circuit (80) which is inserted between the potential levels so as to form a series circuit.

6. Method according to Claim 5, wherein the potential levels (M_{E}, M_{D}) are disconnected from one another by means of a capacitor which is connected in series between the potential levels or by means of a high-pass filter which is connected between the potential levels, wherein the potential levels are in each case supply voltage potential levels or earth potential levels of the detection circuit (42) or of the data processing circuit (44).

7. Method according to Claim 5 or 6, which also comprises: arranging the data processing circuit (44) and the detection circuit (42) in a common assembly (40) which is connected to the sensor device (20; 22) via the cable connection (K), or attaching the data processing circuit (44) and the detection circuit (42) in a common housing (40) which has electrical connection elements (50-58); connecting the connection elements to the detection circuit (42) within the housing; and connecting the connection elements (50-58) outside the housing (40) by connecting the cable connection (K), which is arranged outside, to the sensor device (20; 22) and to the connection elements (50-58).

8. Method according to one of Claims 5-7, wherein a current which is delivered by the motor vehicle rechargeable battery (12) or is flowing to the said motor vehicle rechargeable battery, a temperature of the rechargeable battery (12), a potential of the rechargeable battery (12) or a voltage which is applied to the rechargeable battery is measured by means of sensor devices (20, 22) as the operating variable, and the operating variables are detected by means of a current sensor, a temperature sensor or a voltage sensor, wherein the current sensor is a shunt resistor through which the current which is to be detected is directed and which connects a negative pole of the rechargeable battery to an earth connection (16) of the on-board electrical system or which connects a positive pole (14) of the rechargeable battery to a supply potential connection of the on-board electrical system; the current sensor is a magnetic sensor or a Hall sensor which is arranged in a magnetic field which is generated by the current; the temperature sensor is a temperature semiconductor sensor, an NTC resistor or a PTC resistor which forms a heat-transmitting contact-connection with the rechargeable battery (12) in order to detect the operating temperature of the said rechargeable battery; and the voltage sensor comprises a tap (30) which is directly electrically connected to a positive pole (14) of the rechargeable battery via a voltage divider or via a series resistor.

9. Method according to one of Claims 5-8, wherein the sensor device (20; 22) is arranged directly on the rechargeable battery (12) and the detection circuit (42) is connected to the sensor device (20; 22) via plug connections (30-38; 50-58) and a cable (K) having a length of at least 0.5 m, at least 1 m, at least 2 m, at least 5 m or at least 10 m, and the detection circuit (42) is arranged so as to be physically separated from the sensor device (20; 22).

## Revendications

1. Dispositif de surveillance d'accumulateur comprenant :
un dispositif de détection (20, 22) qui peut être raccordé électriquement à un accumulateur de véhicule automobile (12) et disposé sur celui-ci, lequel est configuré pour acquérir une grandeur de fonctionnement de l'accumulateur (12) ;
un circuit d'acquisition (42) qui est relié avec le dispositif de détection (20, 22) par le biais d'une liaison par câble ; et
un circuit de traitement de données (44) qui est relié avec le circuit d'acquisition (42) par le biais d'un circuit d'isolation des potentiels (80), le circuit d'isolation des potentiels (80) isolant l'un de l'autre un plan de potentiel (M_{E}) du circuit d'acquisition (42) et un plan de potentiel (M_{D}) du circuit de traitement de données (44) pour les composantes de tension continue et les reliant entre eux pour les composantes de tension alternative,
le circuit de traitement de données (44) et le circuit d'acquisition (42) étant disposés sous la forme d'un sous-ensemble (40) commun qui est relié avec le dispositif de détection (20, 22) par le biais de la liaison par câble (K), ou alors le circuit de traitement de données (44) et le circuit d'acquisition (42) étant entourés par un boîtier (40) commun muni d'éléments de liaison électrique (50 - 58) qui sont reliés à l'intérieur du boîtier (40) avec le circuit d'acquisition (42) et par le biais de la liaison par câble (K) disposée à l'extérieur du boîtier (40) avec le dispositif de détection (20, 22).

2. Dispositif de surveillance d'accumulateur selon la revendication 1, le circuit d'isolation des potentiels (80) comprenant un condensateur ou un filtre passe-haut branché en série entre les plans de potentiel et le circuit d'isolation des potentiels reliant en outre en série un plan de potentiel de tension d'alimentation du circuit d'acquisition (42) avec un plan de potentiel de tension d'alimentation du circuit de traitement de données (44), ou alors le circuit d'isolation des potentiels (80) reliant en série un plan de potentiel de masse du circuit d'acquisition (42) avec un plan de potentiel de masse du circuit de traitement de données (44).

3. Dispositif de surveillance d'accumulateur selon l'une des revendications précédentes, la grandeur de fonctionnement étant un courant délivré par l'accumulateur de véhicule automobile (12) ou circulant vers celui-ci, une température de l'accumulateur, un potentiel de l'accumulateur (12) ou une tension présente aux bornes de l'accumulateur (12), et le dispositif de détection (20, 22) comprenant au moins l'un des détecteurs suivants : un détecteur de courant (20) configuré pour acquérir le courant, une sonde de température (22) configurée pour acquérir la température et un détecteur de tension (30) configuré pour acquérir le potentiel ou la tension de l'accumulateur ; et le détecteur de courant étant une résistance de shunt qui relie un pôle négatif de l'accumulateur avec une borne de masse du réseau de bord (16) ou qui relie un pôle positif de l'accumulateur (14) avec une borne de potentiel d'alimentation du réseau de bord, ou le détecteur de courant étant un détecteur magnétique ou un détecteur à effet Hall qui acquiert l'intensité d'un champ magnétique généré par le courant ; la sonde de température étant une sonde de température à semiconducteur, une résistance CTN ou une résistance CTP qui se trouve en contact de transmission thermique avec l'accumulateur (12) afin d'acquérir sa température de fonctionnement ; et le détecteur de tension comprenant une prise (30) qui est reliée électriquement avec le pôle positif de l'accumulateur (14) directement, par le biais d'un diviseur de tension ou par le biais d'une résistance série.

4. Dispositif de surveillance d'accumulateur selon l'une des revendications précédentes, le dispositif de détection étant disposé directement sur l'accumulateur (12) et le circuit d'acquisition (42) étant relié avec le dispositif de détection par le biais de connexions enfichables (30 - 38 ; 50 - 58) et d'un câble (K) ayant une longueur d'au moins 0,5 m, d'au moins 1 m, d'au moins 2 m, d'au moins 5 m ou d'au moins 10 m.

5. Procédé de connexion électrique sans perturbations d'un dispositif de détection (20, 22) qui acquiert les grandeurs de fonctionnement d'un accumulateur de véhicule automobile (12) et qui est disposé sur l'accumulateur (12), muni d'un circuit d'acquisition (42) et d'un circuit de traitement de données, comprenant :
liaison du dispositif de détection (20, 22) avec le circuit d'acquisition (42) disposé à distance de celui-ci par le biais d'une liaison par câble (K) ; et
liaison du circuit de traitement de données (44) avec le circuit d'acquisition (42) par liaison d'un plan de potentiel (M_{E}) du circuit d'acquisition (42) avec un plan de potentiel (M_{D}) du circuit de traitement de données (44) pour les composantes de tension alternative ; et
isolation du plan de potentiel (M_{E}) du circuit d'acquisition (42) du plan de potentiel (M_{D}) du circuit de traitement de données (44) pour les composantes de tension continue au moyen d'un circuit d'isolation des potentiels (80) qui est inséré dans un circuit série entre les plans de potentiel.

6. Procédé selon la revendication 5, selon lequel les plans de potentiel (M_{E}, M_{D}) sont isolés l'un de l'autre au moyen d'un condensateur branché en série entre les plans de potentiel ou au moyen d'un filtre passe-haut branché entre les plans de potentiel, les plans de potentiel étant respectivement des plans de potentiel de tension d'alimentation ou des plans de potentiel de masse du circuit d'acquisition (42) ou du circuit de traitement de données (44).

7. Procédé selon la revendication 5 ou 6, comprenant en outre :
disposition du circuit de traitement de données (44) et du circuit d'acquisition (42) dans un sous-ensemble (40) commun qui est relié avec le dispositif de détection (20, 22) par le biais de la liaison par câble (K), ou alors fixation du circuit de traitement de données (44) et du circuit d'acquisition (42) dans un boîtier (40) commun qui présente des éléments de liaison électrique (50 - 58) ; liaison des éléments de liaison électrique à l'intérieur du boîtier avec le circuit d'acquisition (42) ; et liaison des éléments de liaison (50 - 58) à l'extérieur du boîtier (40) par raccordement de la liaison par câble (K), disposée à l'extérieur, au dispositif de détection (20, 22) ainsi qu'aux éléments de liaison (50 - 58).

8. Procédé selon l'une des revendications 5 à 7, selon lequel la grandeur de fonctionnement mesurée au moyen des dispositifs de détection (21, 22) est un courant délivré par l'accumulateur de véhicule automobile (12) ou circulant vers celui-ci, une température de l'accumulateur (12), un potentiel de l'accumulateur (12) ou une tension présente aux bornes de l'accumulateur, et l'acquisition des grandeurs de fonctionnement est réalisée au moyen d'un détecteur de courant, d'une sonde de température ou d'un détecteur de tension, le détecteur de courant étant une résistance de shunt à travers laquelle est dévié le courant à acquérir et qui relie un pôle négatif de l'accumulateur avec une borne de masse du réseau de bord (16) ou qui relie un pôle positif de l'accumulateur (14) avec une borne de potentiel d'alimentation du réseau de bord ; le détecteur de courant étant un détecteur magnétique ou un détecteur à effet Hall qui est disposé dans un champ magnétique généré par le courant ; la sonde de température étant une sonde de température à semiconducteur, une résistance CTN ou une résistance CTP qui se trouve en contact de transmission thermique avec l'accumulateur (12) afin d'acquérir sa température de fonctionnement ; et le détecteur de tension comprenant une prise (30) qui est reliée électriquement avec le pôle positif de l'accumulateur (14) directement, par le biais d'un diviseur de tension ou par le biais d'une résistance série.

9. Procédé selon l'une des revendications 5 à 8, selon lequel le dispositif de détection (20, 22) est disposé directement sur l'accumulateur (12) et le circuit d'acquisition (42) est relié avec le dispositif de détection (20, 22) par le biais de connexions enfichables (30 - 38 ; 50 - 58) et d'un câble (K) ayant une longueur d'au moins 0,5 m, d'au moins 1 m, d'au moins 2 m, d'au moins 5 m ou d'au moins 10 m et le circuit d'acquisition (42) est monté en étant séparé dans l'espace du dispositif de détection (20, 22).
